# EUROPEAN PATENT APPLICATION

(11) **EP 3 513 864 A1**
(43) Date of publication of application: **24.07.2019**
(21) Application number: 19150562.7
(22) Date of filing: 07.01.2019
(51) Int. Cl.: B01D 53/46, H01M 8/2425

(54) **SOLID OXIDE ELECTROCHEMICAL GAS SEPARATOR INERTING SYSTEM**

(30) Priority: 09.01.2018 US 201815866184
(71) Applicant: Hamilton Sundstrand Corporation, Charlotte, NC 28217-4578 (US)
(72) Inventor: RHEAUME, Jonathan, West Hartford, CT Connecticut 06119 (US)
(74) Representative: Dehns

(57) **Abstract**

An air inert gas generating system consists of heat exchangers, a heating element, and a plurality of solid oxide electrochemical gas separator (SOEGS) cells (2). The SOEGS cells (2) are interconnected in series to create a stack. A voltage is applied to the stack causing oxygen ions to be transported from the air flowing through the cathode (4) through the electrolyte to the anode (6) side of the SOEGS, resulting in oxygen-depleted gas. The oxygen-depleted gas can be used to inert the ullage of aircraft fuel tank or support the fire suppression system in the cargo hold. The oxygen-enriched gas can be used for other purposes.

## Description

### BACKGROUND

Fuel tanks can contain potentially combustible combinations of fuel vapors, oxygen, and ignition sources. To prevent combustion, inert gas, such as nitrogen-enriched air (NEA) or oxygen-depleted air (ODA), is introduced into the ullage of a fuel tank, in order to keep the oxygen concentration in the ullage below 12%. A variety of membrane-based technologies have conventionally been used to inert fuel tank air. Similarly, fire suppression systems, such as fire suppression systems deployed in aircraft cargo holds, can function with inert gas.

### SUMMARY

In one embodiment, a gas inerting system includes a solid oxide electrochemical gas separator system, a dilution air source configured to selectively add dilution air to the incoming process air or the oxygen-enriched air, a controller configured to control the dilution air source, and an outlet configured to direct the oxygen-depleted air to a location requiring inerting. The solid oxide electrochemical gas separator system includes a cathode configured to receive incoming process air and produce oxygen-depleted air, and an anode configured to evolve oxygen.

In another embodiment, a gas inerting method includes separating incoming process air into oxygen-enriched air and oxygen-depleted air in a solid oxide electrochemical gas separator system, selectively temperature controlling the solid oxide electrochemical gas separator system with dilution air, selectively diluting the oxygen-enriched air with dilution air, and inerting a space with the oxygen-depleted air.

### BRIEF DESCRIPTION OF THE DRAWINGS

FIG. 1 is a schematic diagram of a single solid oxide electrochemical gas separator cell.
FIGS. 2A-2B are views of planar solid oxide electrochemical gas separator stacks.
FIG. 3A-3B are perspective views of a single tubular solid oxide electrochemical gas separator cell and a tubular solid oxide electrochemical gas separator stack.
FIG. 4A is a schematic diagram of a solid oxide electrochemical gas separator system.
FIG. 4B is a schematic diagram of a solid oxide electrochemical gas separator system in another embodiment which features an electrical heater.
FIG. 4C is a schematic diagram of a solid oxide electrochemical gas separator system in another embodiment which features a motor-assisted turbocharger.
FIG. 4D is a schematic diagram of a solid oxide electrochemical gas separator system in another embodiment which includes a burner and an electrical heater.
FIG. 4E is a schematic diagram of a solid oxide electrochemical gas separator system where the anode does not receive process air.

### DETAILED DESCRIPTION

The present disclosure describes a system and method to generate inert gas for use in combustion prevention and fire suppression. In particular, the system can be applied to fuel tank inerting or to fire suppression for aircraft cargo areas, dry bays, and other areas that require fire protection. The system uses solid oxide electrochemical gas separators (SOEGS) cells configured to transport oxygen out of incoming process air, resulting in inert oxygen-depleted air. The use of SOEGS cells is beneficial for purposes of energy efficiency and lower system weight. In addition, the replacement of ozone-depleting organic halides such as Halon that are used as fire extinguishing agents on aircraft with an inert gas generation system is more environmentally benign.

Ceramic solid oxide fuel cells have been leveraged in a variety of systems. Generally, past uses configure the system as a fuel cell for producing electrical current. In this configuration, both fuel and air are fed into the cells, resulting in a voltage difference across the cell that can be used to generate an electric current. In this traditional configuration, the cathode of the fuel cell is positive, while the anode of the fuel cell is negative. In similar configurations, solid oxide systems have been used to accomplish electrolysis of water or carbon dioxide, splitting the water or carbon dioxide into separated components. However, solid oxide technology has scarcely been used in a "gas separator" configuration.

Rarely have ceramic solid oxide cells been used as solid oxide electrochemical gas separators (SOEGS). In a gas separator configuration, the polarity of the cell changes sign in comparison to a fuel cell according to convention. The cathode is negative, and the anode is positive (higher potential). Nonetheless, the anode is the site of oxidation and the cathode is the site of reduction reactions. When a solid oxide cell is used in such a configuration, instead of generating a current, the SOEGS generates oxygen-depleted air. In the SOEGS configuration, an applied DC voltage induces a current that causes incoming oxygen to reduce in the cathode and be transported through the oxygen-conducting electrolyte to the anode.

The use of SOEGS has several benefits. First, the use of an SOEGS is more energy efficient in operation than the use of other types of electrochemical gas separators, such as those containing a proton exchange membrane. Second, the use of SOEGS has the potential to decrease the weight of the inert gas and fire suppression systems. Finally, the proposed SOEGS gas separation system exhaust comes out dry with no need to remove humidity from the system, as compared to proton exchange membrane gas separator systems.

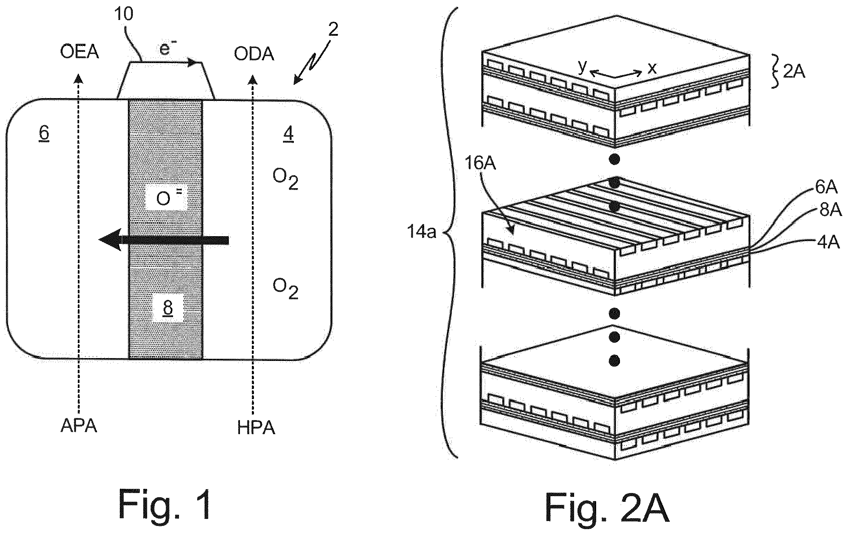

FIG. 1 is a schematic diagram of solid oxide electrochemical gas separator (SOEGS) cell 2. The diagram of SOEGS cell 2 includes cathode 4, anode 6, electrolyte 8, bias voltage 10, heated process air (HPA), anode process air (APA), oxygen-depleted air (ODA), oxygen-enriched air (OEA), oxygen molecules (O₂), oxygen ions (O⁼), and electrons (e⁻). Cathode 4 and anode 6 are separated by electrolyte 8, which may be a film. Cathode 4 and anode 6 are thus separated from each other, but bias voltage 10 is run across SOEGS cell 2 from anode 6 to cathode 4, electrically connecting anode 6 and cathode 4.

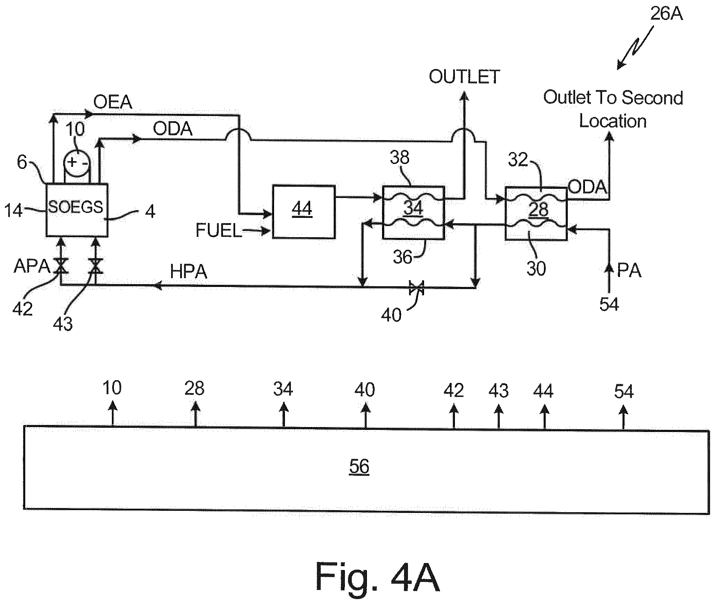

Cathode 4 and anode 6 are generally made of ceramic material such as lanthanum strontium manganite, lanthanum strontium cobaltite, and lanthanum strontium cobalt ferrite; or composite material such as noble metal supported on a ceramic substrate. Electrolyte 8 is an oxygen ion conductor, such as yttrium-stabilized zirconia or ceria doped with rare earth metals. Electrolyte 8 can be a thin film between anode 6 and cathode 4, while anode 6 and cathode 4 may consist of porous ceramic materials that can support the electrolyte. When SOEGS cell 2 is running, a bias voltage 10 of about 1 V per SOEGS cell is applied across SOEGS cell 2 from anode 6 to cathode 4. Incoming heated process air (HPA) is heated outside the SOEGS (see FIG. 4A-4E), and is run through cathode 4. Oxygen molecules (O₂) in heated process air are reduced in cathode 4. Resulting oxygen ions (O⁼) are conducted through electrolyte 8 to anode 6. Heated process air becomes oxygen-depleted air (ODA) as oxygen ions are conducted to anode 6. Thus, oxygen-depleted air exits cathode 4. Oxygen-depleted air has less than 12% oxygen content by volume, and is used to inert a commercial aircraft fuel tank or in a fire suppression system. The oxygen content in the inert product gas can be varied for different applications by changing the cathode flow rate. For fire suppression in which live subjects are present, a higher oxygen content may be preferred (e.g. 15%). In contrast, inert gas on a military aircraft may call for a lower oxygen content (e.g. 9%).

While SOEGS cell 2 is running, anode process air is flowed through anode 6 to reject waste heat from SOEGS cell 2 and to dilute the evolved oxygen. The difference in temperature between the sides of the SOEGS should be no more than approximately 200 degrees Celsius to prevent mechanical failure due to thermally induced stresses. Temperature control air exits anode 6 along with oxygen that is evolved at anode 6; this flow stream contains oxygen previously removed from the incoming heated process air in cathode 4.

Specifically, when heated process air enters cathode 4, the oxygen in heated process air reacts with electrons (e⁻) from applied bias voltage 10 in the following reaction:

O₂ + 4e⁻ → 2O⁼

The resulting oxygen ions are transported across electrolyte 8 where they recombine into oxygen molecules and electrons in the following reaction:

2O⁼ → O₂ + 4e⁻

Thus, air leaving anode 6 contains additional oxygen molecules and is oxygen-enriched air.

FIG. 1 shows a single solid oxide electrochemical gas separator cell. However, the use of a single SOEGS cell would not be a practical means for the inerting of air for use in a combustion prevention or suppression application. For this reason, a plurality of SOEGS cells are, connected in series. The plurality of SOEGS cells is referred to as a "stack" of SOEGS cells. There are two types of shapes in which SOEGS cells can be formed and stacked: planar SOEGS cells and tubular SOEGS cells.

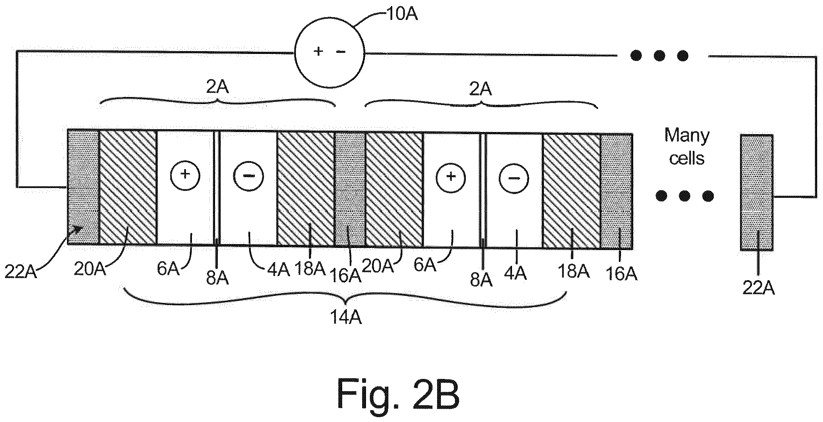

FIGS. 2A and 2B are depictions of planar SOEGS stacks. Planar SOEGS stack includes SOEGS cells 2A, each comprising cathode 4A, anode 6A and electrolyte 8A; in addition to interconnectors 16A, cathode flow fields 18A, anode flow fields 20A, and end portions 22A. In planar SOEGS stack 14A, cathode 4A and anode 6A are flat ceramic layers stacked adjacent to one another, with electrolyte 8A in between. Each SOEGS planar cell 2A is stacked adjacent to neighboring SOEGS planar cells 2A, with interconnectors 16A in-between each cell 2A, providing an electrical connection between cells 2A in series.

FIG 2A is an exploded view of planar SOEGS stack 14A. Planar SOEGS stack 14A is the first configuration for SOEGS. In the planar configuration, SOEGS stack 14A is created by stacking planar SOEGS cells adjacent to each other. Planar SOEGS cell 2A is comprised of layers anode 6A, electrolyte 8A, and cathode 4A, each adjacent to each other. SOEGS stack 14A is comprised of multiple SOEGS cells 2A, interconnected by inter-connectors 16A, which connect SOEGS cells 2A by connecting anode 6A of a first SOEGS cell 2A to cathode 4A of a second SOEGS cell 2A. Incoming heated process air flows orthogonal into SOEGS stack 14A.

FIG. 2B is a block diagram of planar SOEGS stack 14A. SOEGS stack 14A is comprised of a plurality of SOEGS cells 2A which are planar. Each SOEGS cell 2A includes cathode 4A, electrolyte 8A, and anode 6A. Each SOEGS cell 2A also includes anode flow field 20A through which anode process air flows and cathode flow field 18A through which heated process air (HPA) runs. SOEGS stack 14A must be thermally managed to prevent thermal shock to the ceramics. SOEGS stack 14A will generate heat during operation, so provisions to cool the device are needed. SOEGS stack 14A may be cooled via anode process air through anode side 6A of SOEGS stack 14A. Each SOEGS cell 2A is interconnected to adjacent SOEGS cells 2A through bipolar plate interconnectors 16A. The plurality of SOEGS cells 2A are connected in series and are bookended by end portions 22A. End portions 22A close off cell stack 14A. The stacking of planar cells in series saves significant space in a system.

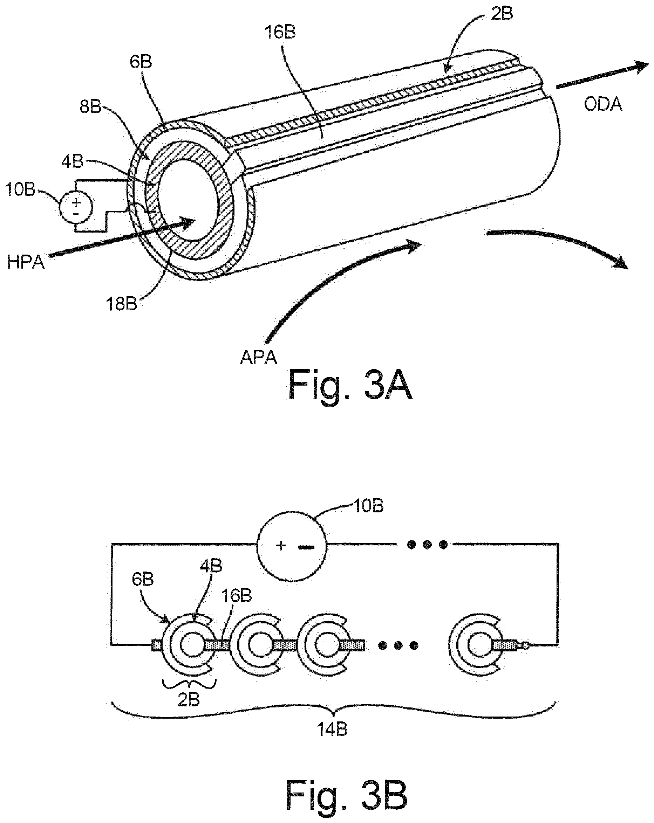

FIGS. 3A and 3B are depictions of tubular SOEGS cell 2B and SOEGS stacks 14B, respectively. Tubular SOEGS stack includes SOEGS cells 2B, each comprising cathode 4B, anode 6B and electrolyte 8B; in addition to interconnectors 16B and cathode flow fields 18B. Tubular SOEGS cell 2B contains the same components as planar cell 2A, but in a slightly different configuration. Anode 6B and cathode 4B are folded over each other to create a cylinder, where anode 6B is on the outside. Electrolyte 8B is a layer in-between cathode 4B and anode 6B. In tubular SOEGS stack 14B, each SOEGS cell 2B is cylindrical in shape, so individual cells 2B cannot be stacked like planar cells 2A. Instead, tubular cells 2B are connected from cathodes 4B of one cell via interconnectors 16B to anodes 6B of an adjacent cell, and are lined up in series.

FIG. 3A is a perspective view of singular tubular SOEGS cell 2B. Tubular SOEGS cell 2B is comprised of anode 6B on the outside of cylindrical SOEGS cell 2B, oxygen ion-conducting electrolyte 8B adjacent to anode 6B, and cathode 4B adjacent to electrolyte 8B. Heated process air (HPA) is flowed through the center of cylindrical SOEGS cell 2B, inside cathode 4B. Anode process air is flowed on the outside of anode 6B external to cylindrical SOEGS cell 2B. Bias voltage 10B is applied across cylindrical SOEGS cell 2B from anode 6B to cathode 4B. Oxygen-depleted air (ODA) flows out of the center of cylindrical SOEGS cell 2B, while oxygen-enriched air (OEA) flows outside of anode 6B.

FIG. 3B is a block diagram of tubular SOEGS stack 14B. Tubular SOEGS stack 14B consists of a plurality of tubular SOEGS cells 2B which are interconnected. In this tubular stack concept, cathode 4B of the first tubular SOEGS cell 2B is in electrical connection with anode 6B of second tubular SOEGS cell 2B. The plurality of SOEGS cells 2B are connected in series. Bias voltage 10B is applied across tubular SOEGS stack 14B. The heated process air (HPA) entering the stack flows in one end of the tubular cells 2B, parallel to the tubes themselves. While both planar and tubular geometric configurations are potential stack configuration options, the application of one embodiment rather than the other may be more beneficial depending on available space, manufacturing costs, and performance requirements.

A plurality of SOEGS cells 2 arranged in SOEGS stacks 14A, 14B can be used to produce enough oxygen-depleted air for use in aircraft systems through the chemical reactions described in reference to FIG. 1. FIGS 4A-4E describe the use of SOEGS system 26 leveraging SOEGS stack 14 (which can be in planar, tubular, or other appropriate configuration) to create oxygen-depleted air for use in combustion prevention and fire suppression applications.

FIG. 4A is a schematic diagram of an SOEGS system 26A in an aircraft. SOEGS system 26A includes cathode heat recovery heat exchanger 28 with sides 30 and 32, anode heat recovery heat exchanger 34 with sides 36 and 38, bypass valve 40, flow control valves 42 and 43, SOEGS stack 14, applied bias voltage 10, burner 44, and inlet 54. SOEGS system 26A is arranged so inputted process air flows into inlet 54, to cathode heat recovery heat exchanger 28, through anode heat recovery heat exchanger 34, through valves 40, 42, to SOEGS stack 14, then oxygen-enriched air is routed through burner 44 and heat exchanger 34 before being sent elsewhere, while oxygen-depleted air returns through heat exchanger 28 before being sent through the outlet to a second location, to be used in a second location (such as a fuel tank ullage) as inert gas.

In SOEGS system 26A, process air (PA) enters system 26A through inlet 54 and continues to cathode heat recovery heat exchanger 28. Process air can be bleed air, compressed air, cabin air, ram air or fan air. Incoming process air should be purified (not pictured) to remove impurities prior to entering the system, and may have to be mechanically compressed (not pictured) if it is ram air or fan air. Incoming process air contains higher than 12% oxygen upon entering the system, and must be temperature-conditioned before being reduced in SOEGS stack 14.

Thus, heat exchangers 28, 34, flow control valves 40, 42, 43, and burner 44 are in SOEGS system 26 to temperature control incoming process air to a range of at least 500 degrees Celsius and no more than 1000 degrees Celsius. Ideally, process air is heated to a temperature of approximately 650 - 850 degrees Celsius. If process air is too cold, then the kinetics of the reaction in the solid oxide electrochemical gas separator cells will be adversely affected. If process air is too hot, then the longevity and consistency of the solid oxide electrochemical gas separator cells may be compromised due to the microstructural aging of the ceramic materials. Temperatures outside the ideal range may cause downgraded performance of the solid oxide electrochemical gas separator system.

Process air first enters cathode heat recovery heat exchanger 28. Cathode heat recovery heat exchanger 28 has two sides: cold side 30 and hot side 32. Process air enters cathode heat recovery heat exchanger 28 in cold side 30, where process air is heated from the hot inert product gas.

Heated process air (HPA) is then either routed to anode heat recovery heat exchanger 34 for further heating, or through bypass valve 40. Anode heat recovery heat exchanger 34 consists of two sides: cold side 36 and hot side 38. If heated process air enters anode heat recovery heat exchanger, then heated process air goes in anode heat recovery heat exchanger 34 cold side 36 where heated process air is further temperature-conditioned before flowing to SOEGS stack 14. Subsequently, heated process air exits anode heat recovery heat exchanger cold side 36 and is routed to solid oxide electrochemical gas separator (SOEGS) stacks 14.1f some heated process air is routed through bypass valve 40, then it can mix with heated process air from anode heat recovery heat exchanger 34 cold side 36 in order to temperature-control gases to SOEGS stack 14.

Flow of heated process air into SOEGS stack 14 can be regulated by flow control valves 42, 43, allowing for both temperature control of SOEGS 14 and safety controls. Flow control valve 43 controls flow of process air into cathode 4. Flow control valve 42 can optionally regulate and shut off flow of heated process air into anode 6. For example, if flow control valve 42 is open and heated process air is flowed into anode 6, the heated air can warm up SOEGS 14 and allow quicker startup of reactions within SOESG 14 by promoting the kinetics of those reactions. Less activation energy is required for the reactions in SOEGS 14 when the stack is at higher temperatures. At low oxygen removal rates, heating air may be required to maintain a desirable operating temperature.

Alternatively, when SOEGS 14 is operating, cooling anode process air may be necessary in anode 6 to remove the power due to internal resistance losses resulting from irreversible processes. This allows for increasing flexibility and tailoring of SOEGS system 26A. Optionally, system 26A can include a temperature sensor proximate to SOEGS stack 14 in communication with controller 56 (discussed in detail below) so that the flow of cooling air or heated air through SOEGS stack 14 can be controlled based on current temperatures.

Additionally, when SOEGS stack 14 is running, anode 6 evolves oxygen as described in reference to FIG. 1. Flowing dilution air into anode 6 through valve 42 can dilute oxygen exiting anode 6, tailoring the concentration of oxygen in OEA and preventing highly concentrated oxygen from flowing through the aircraft. Hot oxygen is extremely reactive and potentially dangerous. Ducting and components in contact with oxygen evolved from anode 6 may oxidize in the presence of concentrated oxygen at elevated temperatures, requiring passivation. Instead, adjusting dilution air running into anode 6 allows for specific gas composition (and oxygen concentration) exiting anode 6. Similarly, if a high concentration exiting anode 6 is desired for combustion (such as in burner 44), less dilution air can be used.

Flow of heated process air into SOEGS stack 14 is regulated by flow control valves 42 and 43. Heated process air is flowed through SOEGS stack 14 cathode side 4, while anode process air is flowed through SOEGS stacks anode side 6. Temperature control air is used to maintain a desired temperature inside SOEGS stack 14 and to dilute jot oxygen evolved at the anode. In various modes of operation, APA can be cooling air to reduce heat in SOEGS 14, or hot air to jump start kinetics inside SOEGS 14 at start up. Power source 10 represents a bias voltage that produces a DC current, resulting in oxygen molecules in heated process air reducing in normal operation, and subsequent oxygen ions moving from heated process air in cathode 4 through electrolyte 8 to anode 6. The chemical reactions which occur in cathode 4 and anode 6 are described in detail with reference to FIG. 1. Power source 10 can also assist stack warm-up by providing electricity for Joule heating.

Air leaving cathode 4 is oxygen-depleted air (ODA). Air leaving anode 6 is oxygen-enriched air (OEA). Oxygen-depleted air is inert air with depressed oxygen content, e.g. below 12% for fuel tank inerting of commercial aircraft fuel tanks or below 15% for fire suppression purposes. Oxygen-depleted air is routed back to cathode heat recovery heat exchanger 28, where oxygen-depleted air passes through cathode heat recovery heat exchanger 28 hot side 32 and is cooled to a temperature safe for use in inerting applications. Failure to cool oxygen-depleted air may result in damage to other materials, structures, and equipment when used for inerting applications. Preferably, oxygen-depleted air is cooled to ambient temperature, however, cooling to a temperature below 80 degrees Celsius for safe use with tank structural materials is acceptable. Oxygen-depleted air is then routed out of SOEGS system 26 through outlet to a second location, where ODA will be used to inert fuel tanks or in cargo hold fire suppression (not pictured).

If ODA is being used for cargo hold fire suppression purposes, the presence of water vapor in combustion gases exiting burner 44 may be acceptable. In this case, combustion gases exiting burner 44 may be combined with oxygen-depleted air downstream of heat exchanger 28 cold side 32 in order to maximize the temperature difference between hot side 30 and cold side 32 in heat exchanger 28.

Oxygen-enriched air exiting SOEGS stack 14 reacts with fuel in burner 44 to create combustion gases that contain water vapor. Depending on the stoichiometry, the exiting combustion gases may be sufficiently depleted of oxygen to consider as inert gas, however, for fuel tank inerting, the water vapor is difficult to remove to the required extent (sub-freezing dew point) and so it may be discarded through an outlet (e.g., overboard). Burner 44 is fed by fuel from a fuel tank (not pictured). Burner 44 heats oxygen-enriched air (OEA) to a range of 500 - 2000 degrees Celsius. The heated gas may then be routed back through anode heat recovery heat exchanger 34 hot side 38, where oxygen-enriched air is cooled by transferring its heat to process air which is heated to the range of 650 - 850 degrees Celsius. Heated process air is then routed out of anode heat recovery heat exchanger 34 towards SOEGS stacks 14. Simultaneously, the combustion gases exiting anode heat recovery heat exchanger 34 hot side 38 leaves the system through an outlet.

Controller 56 allows for manipulation of components in system 26A. Controller 56 is operatively coupled (e.g., electrically and/or communicatively) to components as depicted in FIGS. 4A-4E to send and/or receive data to control operation of these components. Controller 56 is connected to SOEGS power source 10, and can turn SOEGS stack 14 on or off, or control the amount of power from source 10. Controller 56 is also connected to heat exchangers 28 and 34, and can adjust their operation and flow. Additionally, controller 56 is connected to valves 40, 42, 43, and can manipulate the flow of heated process air, cooling air, or dilution air as discussed with regards to flow control valve 42 to adjust the concentration of oxygen in OEA leaving anode 6 and the temperature of SOEGS stack 14. Similarly, controller 56 can adjust valve 43 to regulate the flow of HPA in order to obtain the desired oxygen content of ODA exiting cathode 4. Controller 56 is also connected to burner 44 (or electrical heater 46 in other embodiments) and can alter the amount of heat produce by burner 44. Finally, controller 56 can be connected to process air stream 54 to control the amount of process air inputted into system 26A.

Controller 12 can include one or more processors and computer-readable memory encoded with instructions that, when executed by the one or more processors, cause controller device 12 to operate in accordance with techniques described herein. Examples of the one or more processors include any one or more of a microprocessor, a digital signal processor (DSP), an application specific integrated circuit (ASIC), a field-programmable gate array (FPGA), or other equivalent discrete or integrated logic circuitry. Computer-readable memory of controller device 12 can be configured to store information within controller device 12 during operation. The computer-readable memory can be described, in some examples, as computer-readable storage media. In some examples, a computer-readable storage medium can include a non-transitory medium. The term "non-transitory" can indicate that the storage medium is not embodied in a carrier wave or a propagated signal. In certain examples, a non-transitory storage medium can store data that can, over time, change (e.g., in RAM or cache). Computer-readable memory of controller device 12 can include volatile and non-volatile memories. Examples of volatile memories can include random access memories (RAM), dynamic random access memories (DRAM), static random access memories (SRAM), and other forms of volatile memories. Examples of non-volatile memories can include magnetic hard discs, optical discs, floppy discs, flash memories, or forms of electrically programmable memories (EPROM) or electrically erasable and programmable (EEPROM) memories. Controller 56 can be a stand-alone device dedicated to the operation of the catalytic oxidation unit, or it can be integrated with another controller.

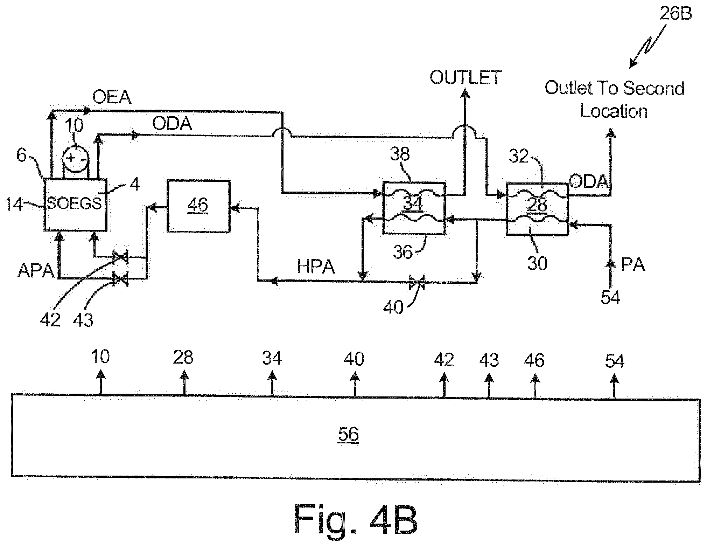

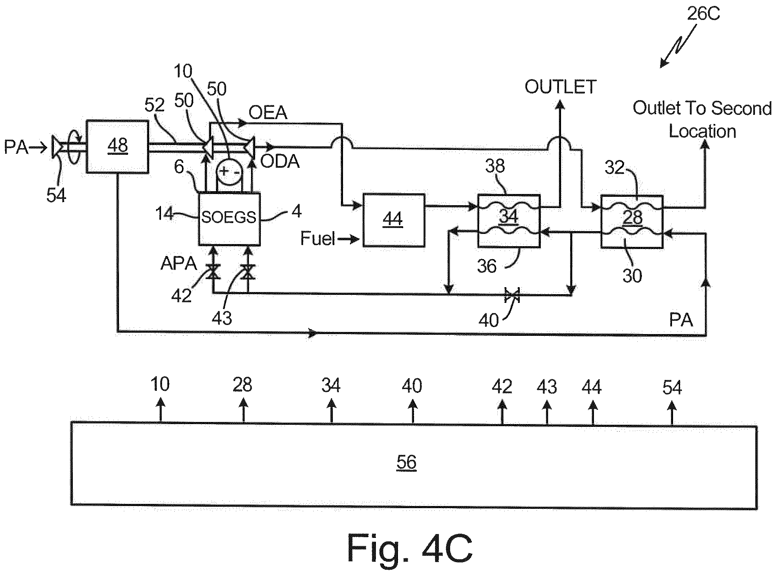

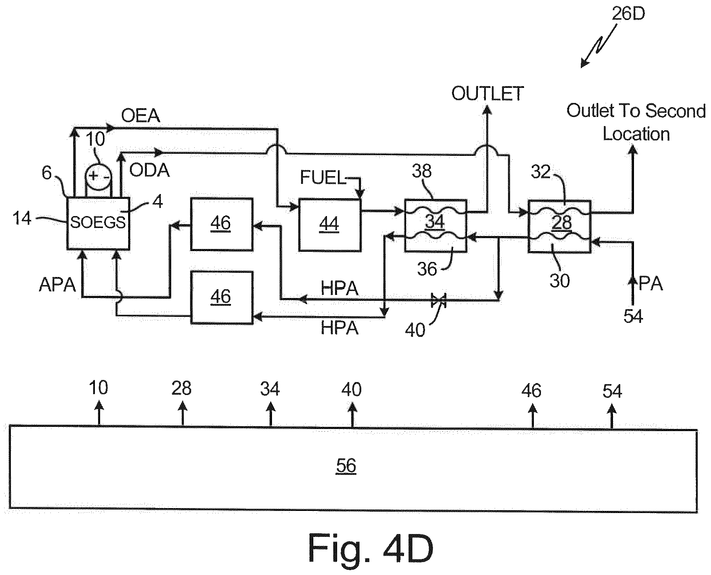

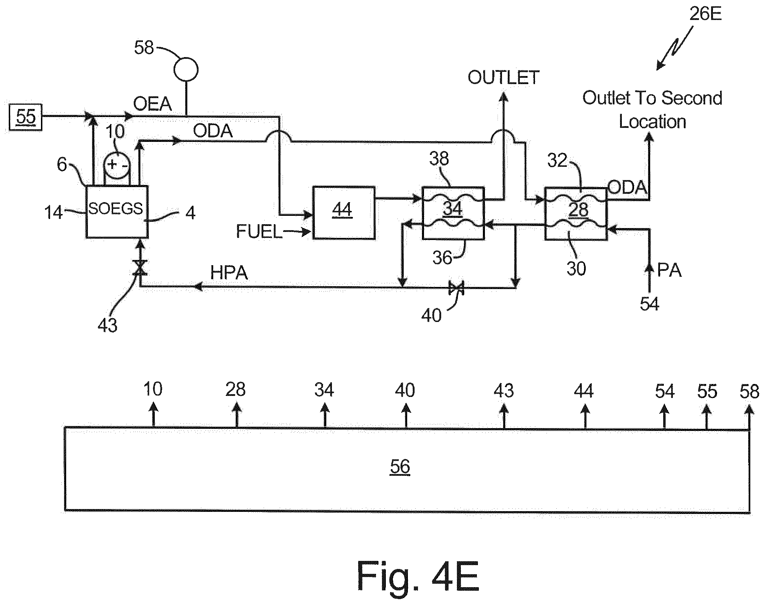

FIGS. 4B, 4C, 4D, and 4E are alternative embodiments of the SOEGS system shown in FIG. 4A. The components of FIGS. 4B, 4C, 4D, and 4E are the same as those described in FIG. 4A, and are connected in the same fashion, except where otherwise described herein. FIG. 4B does not contain burner 44 described in FIG. 4A. Instead, FIG. 4B contains electrical heater 46, which heats process air as it flows to SOEGS stack 14. This embodiment may result in more precise control of the temperature of heated process air.

FIG. 4C includes motor-assisted turbocharger 48, which pressurizes incoming process air before process air is temperature-conditioned in heat exchangers 28, 34. In this configuration, process air enters inlet 54 and is pressurized by motor-assisted turbocharger 48, before process air flows to cathode heat recovery heat exchanger 28. Motor-assisted turbocharger 48 is powered by turbines 50 and shaft 52 which are fed by exhaust gases from SOEGS system 14. FIG. 4C depicts both SOEGS exhaust streams consisting of OEA and ODA being expanded in motor-assisted turbocharger 48, however, also envisioned are the individual streams.

FIG. 4D contains both burner 44, as described in reference to FIG. 4A, and electrical heaters 46. Both heating elements 44, 46, temperature-control air. Burner 44 heats oxygen-enriched air (OEA) exiting SOEGS stack 14, while electrical heaters 46 heat process air flowing towards SOEGS stack 14 for precise control of the temperature of heated process air.

Similarly to systems 26A-26D, SOEGS system 26E in FIG 4E is arranged so inputted process air flows into inlet 54, to cathode heat recovery heat exchanger 28, through anode heat recovery heat exchanger 34, through valves 40, 42, to SOEGS stack 14, then oxygen-enriched air is routed through heat exchanger 34 before being sent to SOEGS stack 14, while oxygen-depleted air returns through heat exchanger 28 before being sent through the outlet to a second location, to be used in a second location (such as a fuel tank ullage) as inert gas. When process air flows into SOEGS stack 14, it only flows through cathode 4, not through anode 6. In this configuration, only air coming into cathode 4 through valve 43 is used to thermally manage SOEGS stack 14.

In system 26E, dilution air source 55 is located on oxygen enriched air (OEA) line downstream of anode 6 of SOEGS stack 14 as depicted in FIG 4E. Thus, oxygen evolved in SOEGS 14 and exiting anode 6 can be diluted downstream of SOEGS 14 with dilution air from dilution air source 55. Dilution air source 55 inputs dilution air into oxygen enriched air exiting anode 6 both to adjust oxygen content in OEA before it reaches heat exchanger 34, and also to cool OEA exiting anode 6. Dilution air source 55 is controlled by controller 56. System 26E can optionally include oxygen sensor 58 downstream of dilution air source 55 that detects oxygen concentration in the oxygen enriched air and communicates with controller 56.

Without incoming anode process air or cooling air into anode 6, pure oxygen is evolved which exits SOEGS stack 14 in the OEA line. Hot, pure oxygen is extremely reactive and potentially dangerous. Thus, diluting the oxygen exiting anode 6 immediately downstream of SOEGS stack 14 provides a safety measure to ensure highly oxidizing pure oxygen does not pose a danger. Adding dilution air downstream of SOEGS stack 14 reduces concerns of thermal stress on SOEGS stack 14 that would occur with adding upstream cooling air to anode 6 due to temperature differentials within SOEGS stack 14. Cool air that is not preheated can be used as the dilution air. Optionally, because anode 6 is not preheated, SOEGS stack 14 can be outfitted with resistance elements for heating, for example during system start-up. During regular operation, SOEGS stack 14 produces waste heat that must be removed in order to avoid overheating ceramic constituents so means to reject heat is envisioned such as heat exchangers integrated into the stack. In this embodiment (not shown), cooling air can be heated process air.

Management of anode gas flow within SOEGS system 26E allows for safety measures, thermal regulation, and tailoring of inert gas concentrations. Dilution of hot oxygen with cooling air prevents potentially harmful, deleterious reactions. Temperature regulation of anode 6 with cooling air or heated process air allows for reduced electric input at higher temperatures due to a lower of activation energy which reduces operating costs. Overall, managing anode gas flow allows for greater flexibility in inert gas production.

In all of the preceding embodiments, the inert product gas may not be regulated to the desired temperature. For example, for fuel tank inerting, a maximum inert gas temperature of 80 degrees Celsius is desired to avoid structural damage to fuel tank components. Additional temperature regulation may be required beyond the heat exchangers and is envisioned within the scope of this invention.

### Discussion of Possible Embodiments

The following are non-exclusive descriptions of possible embodiments of the present invention.

In one embodiment, a gas inerting system includes a solid oxide electrochemical gas separator system, a dilution air source configured to selectively add dilution air to the incoming process air or the oxygen-enriched air, a controller configured to control the dilution air source, and an outlet configured to direct the oxygen-depleted air to a location requiring inerting. The solid oxide electrochemical gas separator system includes a cathode configured to receive incoming process air and produce oxygen-depleted air, and an anode configured to evolve oxygen.

The gas inerting system of the preceding paragraph can optionally include, additionally and/or alternatively, any one or more of the following features, configurations and/or additional components:

The incoming process air is selected from the group consisting of engine bleed air, compressed air, ram air, cabin air, and fan air.

The dilution air source is located upstream of the anode.

The dilution air source is located downstream of the anode.

The gas inerting system includes an oxygen sensor downstream of the dilution air source configured to detect oxygen concentration in the oxygen enriched air and communicate with the controller.

The gas inerting system includes a temperature sensor configured to detect temperature of the solid oxide electrochemical gas separator system and communicate with the controller.

The gas inerting system includes further comprising a burner configured to receive the oxygen-enriched air from the electrochemical gas separator system and combust the oxygen-enriched air to heat the electrochemical gas separator system.

The gas inerting system includes a heater configured to heat the incoming process air upstream of the electrochemical gas separator system.

The gas inerting system includes a first heat exchanger configured to receive and temperature control the oxygen-depleted air from the electrochemical gas separator system and the incoming process air.

The gas inerting system includes a second heat exchanger configured to receive and temperature control the oxygen-enriched air from the electrochemical gas separator system and the incoming process air.

The solid oxide electrochemical gas separator system is configured to produce oxygen-depleted air with varying oxygen concentrations.

The oxygen-depleted air contains less than 15% oxygen.

The oxygen-depleted air contains less than 12% oxygen.

In another embodiment, a gas inerting method includes separating incoming process air into oxygen-enriched air and oxygen-depleted air in an electrochemical gas separator system, selectively temperature controlling the electrochemical gas separator system with dilution air, selectively diluting the oxygen-enriched air with dilution air, and inerting a space with the oxygen-depleted air.

The method of the preceding paragraph can optionally include, additionally and/or alternatively, any one or more of the following features, configurations and/or additional components:

Selectively diluting the oxygen-enriched air comprises manipulating oxygen content of the oxygen-enriched air.

The method includes simultaneously selectively temperature controlling the solid oxide electrochemical gas separator system and selectively diluting the oxygen-enriched air.

The incoming process air is selected from the group consisting of engine bleed air, compressed air, ram air, cabin air, and fan air.

The method includes heating the incoming process air with a heater.

The method includes combusting the oxygen-enriched air in a burner and heating the electrochemical gas separator system.

The method includes temperature controlling the incoming process air in a cathode recovery heat exchanger by routing the oxygen-depleted air to the cathode recovery heat exchanger.

The method includes temperature controlling the incoming process air in an anode recovery heat exchanger by routing the oxygen-enriched air to the cathode recovery heat exchanger.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A gas inerting system comprising:
a solid oxide electrochemical gas separator system comprising:
a cathode (4) configured to receive incoming process air and produce oxygen-depleted air, and
an anode (6) configured to evolve oxygen;
a dilution air source configured to selectively add dilution air to the incoming process air or the oxygen-enriched air;
a controller (56) configured to control the dilution air source; and
an outlet configured to direct the oxygen-depleted air to a location requiring inerting.

2. The gas inerting system of claim 1, wherein the incoming process air is selected from the group consisting of engine bleed air, compressed air, ram air, cabin air, and fan air.

3. The gas inerting system of claims 1 or 2, wherein the dilution air source is located upstream of the anode.

4. The gas inerting system of claims 1 or 2, wherein the dilution air source is located downstream of the anode.

5. The gas inerting system of any preceding claim, further comprising an oxygen sensor downstream of the dilution air source and configured to detect oxygen concentration in the oxygen enriched air and communicate with the controller (56).

6. The gas inerting system of any preceding claim, further comprising a temperature sensor configured to detect temperature of the solid oxide electrochemical gas separator system and communicate with the controller (56).

7. The gas inerting system of any preceding claim, further comprising a burner (44) configured to receive the oxygen-enriched air from the electrochemical gas separator system and combust the oxygen-enriched air to heat the electrochemical gas separator system; and/or
further comprising a heater (46) configured to heat the incoming process air upstream of the electrochemical gas separator system.

8. The gas inerting system of any preceding claim, further comprising a first heat exchanger configured to receive and temperature control the oxygen-depleted air from the electrochemical gas separator system and the incoming process air; and/or
further comprising a second heat exchanger configured to receive and temperature control the oxygen-enriched air from the electrochemical gas separator system and the incoming process air.

9. The gas inerting system of any preceding claim, wherein the solid oxide electrochemical gas separator system is configured to produce oxygen-depleted air with varying oxygen concentrations.

10. The gas inerting system of any preceding claim, wherein the oxygen-depleted air contains less than 15% oxygen, and preferably wherein the oxygen-depleted air contains less than 12% oxygen.

11. A gas inerting method comprises:
separating incoming process air into oxygen-enriched air and oxygen-depleted air in a solid oxide electrochemical gas separator system;
selectively temperature controlling the solid oxide electrochemical gas separator system with dilution air;
selectively diluting the oxygen-enriched air with dilution air; and
inerting a space with the oxygen-depleted air.

12. The method of claim 11, wherein selectively diluting the oxygen-enriched air comprises manipulating oxygen content of the oxygen-enriched air.

13. The method of claims 11 or 12, further comprising simultaneously selectively temperature controlling the solid oxide electrochemical gas separator system and selectively diluting the oxygen-enriched air.

14. The method of any of claims 11-13, further comprising heating the incoming process air with a heater; and/or
further comprising combusting the oxygen-enriched air in a burner and heating the electrochemical gas separator system.

15. The method of any of claims 11-14, further comprising temperature controlling the incoming process air in a cathode recovery heat exchanger by routing the oxygen-depleted air to the cathode recovery heat exchanger; and/or
further comprising temperature controlling the incoming process air in an anode recovery heat exchanger by routing the oxygen-enriched air to the cathode recovery heat exchanger.
